Europäisches Patentamt

European Patent Office

Office européen des brevets

(11) Veröffentlichungsnummer: **0 080 727**
**B1**

(12) **EUROPÄISCHE PATENTSCHRIFT**

(45) Veröffentlichungstag der Patentschrift: **23.03.88**

(21) Anmeldenummer: **82111018.6**

(22) Anmeldetag: **29.11.82**

(51) Int. Cl.⁴: **E 01 D 19/08,** E 04 B 1/64

(54) Isolierschicht für Beton- oder Stahlbauwerke.

(30) Priorität: **30.11.81 DE 3147347**

(43) Veröffentlichungstag der Anmeldung:
**08.06.83 Patentblatt 83/23**

(45) Bekanntmachung des Hinweises auf die
Patenterteilung:
**23.03.88 Patentblatt 88/12**

(84) Benannte Vertragsstaaten:
**AT BE CH DE FR GB IT LI NL SE**

(56) Entgegenhaltungen:
**EP-A-0 038 933**
**DE-A-2 438 901**
**FR-A-2 188 627**
**FR-A-2 215 511**
**FR-A-2 431 571**
**GB-A-1 418 493**
**US-A-3 853 682**
**US-A-4 233 356**

(73) Patentinhaber: **Alfred Kunz GmbH & Co.**
**Bavariaring 26**
**D-8000 München 2 (DE)**

㉠ Der Erfinder haben auf ihre Nennung verzichtet

(74) Vertreter: **Lorenz, Eduard et al**
**Rechtsanwälte Lorenz, Eduard - Seidler,**
**Bernhard Seidler, Margrit - Gossel, Hans-K.**
**Philipps, Ina, Dr. Widenmayerstrasse 23**
**D-8000 München 22 (DE)**

Courier Press, Leamington Spa, England.

**Beschreibung**

Die Erfindung betrifft eine thermoplastische Folie aus Bitumen oder bituminösem Kunststoff, die mit einer polsternden Schicht kaschiert ist und die als Isolierschicht mit oben liegender polsternder Schicht der Abdichtung von befahrbaren Beton- oder Stahlbauwerken gegen auf diese aufgebrachte Schutz- oder Deckschichten dient.

Der Überbau von Betonbrücken, brückenähnlichen Bauwerken, Tiefgaragen und andere befahrbare Betonbauwerke müssen vor dem Eindringen von Oberflächenwasser geschützt werden, da das in den Beton einziehende Oberflächenwasser, insbesondere wenn in diesem beispielsweise Tausalze gelöst sind, den Beton und die Stahlbewehrung angreift.

Aus FR—A—22 15 511 ist es bekannt, zur Isolierung einzelne Folien und Schichten nacheinander auf einen Unterbau aus Beton aufzubringen, wobei als einheitliche Folie eine mit einem Faservlies aus Polyester kaschierte kunststoffmodifizierte bituminöse Folie verwendet wird. Die aufgebrachte Fahrbahndecke aus Teer oder Asphalt plastifiziert nicht nur die bitumöse Folie, sondern auch die Mastix, die dadurch durch die Ausnehmungen des Glasfaservlieses dringt und sich mit dem als erste Schicht auf den Unterbau aufgebrachten bituminösen Kaltanstrich verbindet.

Zur Isolierung befahrbarer Betonbauwerke gegen die auf diese aufgebrachten Beläge oder Schutz- und Deckschichten ist aus DE—A—24 38 901 eine Folie der eingangs angegebenen Art bekannt, bei welcher die polsternde Schicht aus einem relativ dicken Vlies oder Gewebe aus Kunststoff-, Asbest- oder Glasfasern besteht. Dabei bildet nach dem Aufkleben der Isolierschicht auf das Betonbauwerk das oben liegende Gewebe oder Vlies eine Schutzlage, die die thermoplastische Folie gegen mechanische Beschädigungen schützt, die beim Befahren der Isolierschicht mit Baufahrzeugen oder beim Aufbringen der Deckschichten aus Gußasphalt oder dergleichen, beispielsweise infolge des Durchdrückens von Splitt, auftreten können. Zusätzlich bildet das Vlies oder Gewebe eine Wärmeisolierung, so daß die thermoplastische Folie durch die Einbautemperatur des Gußasphalts nicht geschwächt werden kann. Die bekannte, aus Gewebe oder Vlies bestehende polsternde Schicht weist jedoch den Nachteil auf, daß die relativ dicken Vlies- oder Beweschichten einen wesentlich geringeren E-Modul als die auf diese aufgebrachten bituminösen Schutz- oder Deckschichten haben. Dies hat zur Folge, daß sich beim Befahren oder sonstigen Belasten der Schutz- oder Deckschicht auf deren Unterseite am Übergang zur polsternden Schicht hohe Biegezugspannungen und Schubspannungen ausbilden, weil das relativ weiche Vlies oder Gewebe keine gleichsam starre, die Schutz- oder Deckschicht schützende Schicht bildet. Diese hohen Biegezug- und Schubspannungen führen insbesondere bei dauernd einwirkender Verkehrsbelastung zur Ausbildung von Rissen und schließlich zur Zerstörung der Schutz- oder Deckschicht. Würde nun auf die schützende Vlies- oder Gewebeschicht verzichtet, müßte die thermoplastische Folie entsprechend dicker ausgebildet werden, um mit Sicherheit eine ihre ganze Dicke erfassende Beschädigung infolge der während des Einbaus auftretenden Belastungen auszuschließen. Andererseits muß die thermoplastische Folie eine große Flexibilität und Dehnfähigkeit besitzen, um, ohne selbst zu zerreißen, Risse im Beton überbrücken zu können. Eine derartig hohe Dehnung einer dicken thermoplastischen Folie führt aber zu dem Nachteil, daß sich, da ihr E-Modul gering ist, Verformungen in vertikaler Richtung infolge der Verkehrslast ergeben, so daß sich hohe Schub- und Biegezugspannungen im unteren Bereich der Schutz- oder Deckschicht ausbilden können, die zu deren Zerstörung führen. Die an die Isolierfolie zu stellenden Forderungen, zum einen eine hohe Dehnung zur Rißüberbrückung und zum anderen eine hohe Verformungsbeständigkeit gegen Vertikallasten aufzuweisen, schließen sich somit gegenseitig aus.

Aufgabe der Erfindung ist est daher, eine Isolierfolie der eingangs angegebenen Art zu schaffen, die einmal eine hohe Dehnung zur Überbrückung von Rissen in dem Beton und zum anderen eine hohe Verformungsbeständigkeit zur Vermeidung von unzulässig hohen Schub- und Biegezugbeanspruchungen in der darüberliegenden Schutz- und Deckschicht aufweist.

Erfindungsgemäß wird diese Aufgabe bei einer Isolierfolie der gattungsgemäßen Art dadurch gelöst, daß die polsternde Schicht aus einem kuststoffmodifizierten Asphalt aus thermoplastischem, weich-plastischem Material besteht, das durch die Wärme der eingebauten Schutz- und Deckschichten aufschmelzbar ist und einen niedrigeren Schmelzpunkt als die Folie hat, und daß die polsternde Schicht eine Dicke von 0,3 bis 2 mm aufweist.

Die erfindungsgemäße Isolierfolie erfüllt in überraschender Weise sämtliche an diese zu stellenden Anforderungen. Die polsternde Schicht aus kunststoffmodifiziertem Asphalt oder dergleichen schützt die Folie vor mechanischen Beschädigungen vor oder beim Einbau der Schutz- und Deckschicht. Sie ist so dick auszuführen, daß die unter dieser liegende Folie beim Befahren durch Baufahrzeuge nicht beschädigt werden kann und daß sich Splittkörner nicht durch die Folie durchzudrücken vermögen, sondern gleichsam in die polsternde Schicht eingebettet werden. Eine weitere wesentliche Wirkung der erfindungsgemäßen Isolierfolie besteht nun darin, daß die polsternde Schicht aus kunststoffmodifiziertem Asphalt oder dergleichen beim Heißeinbau der Schutz- und Deckschicht aus Asphaltbeton oder Gußasphalt bis auf 180° bis 250°C erwärmt werden kann. Bei dieser Temperatur schmilzt nun die polsternde Schicht und wandert in den unteren Bereich der Schutz- und Deckschicht ein, so daß sich in dieser eine veredelte Grenzschicht ausbildet, die ohne puffernde Zwischenschicht unmittelbar auf der isolierenden Folie, die aus Bitumen oder Bitumen mit Kunststoff oder mineralischen Zusätzen, wie Steinmehl, Schiefermehl oder Asbest, bestehen kann, aufliegt. Da die polsternde Schicht die Folie vor oder während des Einbaus der Schutz- und Deckschicht vor mechanischen Beschädigungen schützt und bei deren Einbau gleichsam von dieser aufgezehrt wird, kann die Folie so dünn ausgebildet werden, daß sie aufgrund ihrer Flexibilität und Dehnungsfähigkeit in dem Beton auftretende Risse zu überbrücken vermag und andererseits eine große Verformungsbeständigkeit aufweist, so daß sich die Schutz- und Deckschicht unter Ausbildung unzulässig hoher Schub- und Biegezugspannungen nicht in diese eindrücken kann.

Da die polsternde Schicht während des Einbaus der Schutz- und Deckschicht aus Asphaltbeton oder Gußasphalt aufgeschmolzen wird, bildet sie weiterhin eine Wärmeisolierung für die Folie, die dadurch weniger erweicht und geschwächt wird.

Die erfindungsgemäße Isolierfolie gewährleistet nicht nur eine gute und sichere Isolierung des Betonbauwerks, sie verbindet sich auch sehr gut sowohl mit dem Betonbauwerk als auch mit der darüberliegenden Schutz- und Deckschicht, so daß sie infolge der Verkehrsbelastung auftretende Schubspannungen gut aufzunehmen und zu übertragen vermag.

In weiterer Ausgestaltung der Erfindung ist vorgesehen, daß die polsternde Schicht durch eine dünne Kunststoffolie abgedeckt ist, Da die polsternde Schicht leicht klebrig sein kann, verklebt die auf diese aufgebracht Kunststoffolie mit dieser. Durch die Kunststoffolie wird die Handhabung der Isolierfolie verbessert, weil die Klebrigkeit der polsternden Schicht aufgehoben ist.

In weiterer Ausgestaltung der Erfindung ist vorgesehen, daß die Folie beidseits mit einem engmaschigen, ein Flächengewicht von 20 bis 350 g/m² aufweisenden Gewebe oder Vlies aus Glas-, Asbest- oder Kunststoffasern geringer Dicke kaschiert ist. Diese Kaschierung bildet keine zusätzliche zusammendrückbare Schicht, sondern ist so dünn ausgebildet, daß sie nennenswert zur Verformbarkeit der Folie nicht beiträgt.

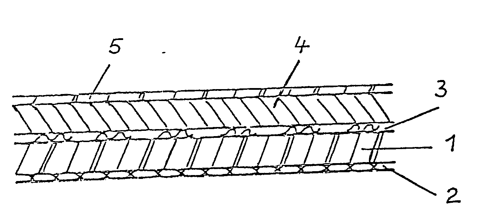

Ein Ausführungsbeispiel der Erfindung wird nachstehend anhand der Zeichnung, in deren einziger Figur ein vergrößerter Schnitt durch die Isolierfolie dargestellt ist, näher erläutert.

Die Folie 1 besteht aus Bitumen oder Bitumen mit Kunststoff und mineralischen Zusätzen wie Steinmehl, Schiefermehl oder Asbest oder auch mit Zusätzen wie Faserstoffen aus entsprechendem Material. Die Folie 1 ist beidseits mit einem dünnen Vlies oder Gewebe 2, 3 aus Glas-, Asbest- oder Kunststoffasern kaschiert. Auf die obere Kaschierung 3 ist eine dicke Beschichtung aus kunststoffmodifiziertem Asphalt oder dergleichen aufgebracht. Auf ihrer Oberseite ist die Beschichtung 4 mit einer Kunststoffolie 5 kaschiert.

Die Isolierfolie wird bei ihrem Einbau in üblicher Weise beispielsweise mit einem bituminösen Kleber auf das Betonbauwerk aufgebracht. Bei dem Einbau der Schutz- und Deckschicht aus Asphaltbeton oder Gußasphalt schmilzt die Beschichtung 4 und die Folie 5 und verbindet sich mit der Schutz- und Deckschicht. Der in der Schutz- und Deckschicht vorhandene Splitt kann sodann zwar unmittelbar auf der Kaschierung 3 der Folie 1 aufliegen, er vermag diese aber nicht zu beschädigen, weil er gleichsam in der aufgeschmolzenen Beschichtung 4 eingebettet ist.

## Patentansprüche

1. Thermoplastische Folie (1) aus Bitumen oder bituminösem Kunststoff, die mit einer polsternden Schicht (4) kaschiert ist und die als Isolierschicht mit oben liegender polsternder Schicht (4) der Abdichtung von befahrbaren Beton- oder Stahlbauwerken gegen auf diese aufgebrachte Schutz- oder Deckschichten dient, dadurch gekennzeichnet, daß die polsternde Schicht (4) aus einem kunststoffmodifizierten Asphalt aus thermoplastischem, weichplastischem Material besteht, das durch die Wärme der eingebauten Schutz- und Deckschichten aufschmelzbar ist und einen niedrigeren Schmelzpunkt als die Folie (1) hat, und daß die polsternde Schicht (4) eine Dicke von etwa 0,3—2 mm aufweist.

2. Isolierschicht nach Anspruch 1, dadurch gekennzeichnet, daß die polsternde Schicht (4) durch eine dünne Kunststoffolie (5) abgedeckt ist.

3. Isolierschicht nach Anspruch 1 oder 2, dadurch gekennzeichnet, daß die Folie (1) beidseits mit einem engmaschigen, ein Flächengewicht von 20—350 g/m² aufweisenden Gewebe oder Vlies (2, 3) aus Glas-, Asbest- oder Kunststoffasern geringer Dicke kaschiert ist.

## Revendications

1. Feuille thermoplastique (1) en bitume ou plastique bitumineux, qui est revêtue d'une couche de rembourrage (4) et sert de couche d'isolation avec la couche de rembourrage (4) tournée vers le haut pour isoler des constructions en béton ou en acier pratiquables contre des couches de protection ou de couverture de celles-ci, caractérisée et ce que la couche de rembourrage (4) consiste en un matériau d'asphalte thermoplastique malléable, modifié par un plastique qui peut être fondu par la chaleur des couches de protection ou de couverture incorporées et possède un point de fusion inférieur à celui de la feuille (1), et que la couche de rembourrage (4) possède une épaisseur d'environ 0,3—2 mm.

2. Couche d'isolation selon la revendication 1, caractérisée en ce que la couche de rembourrage (4) est recouverte par une feuille en plastique (5) mince.

3. Couche d'isolation selon les revendications 1 ou 2, caractérisée en ce que la feuille (1) est contrecollée des deux côtés d'un tissu ou d'un matériel non tissé serrés (2, 3) en fibres de verre, d'amiante ou de plastique, de faible épaisseur et ayant un grammage de 20—350 g/m².

## Claims

1. A thermoplastic sheeting (1) consisting of bitumen or bituminous plastics, which is covered by a cushioning layer (4) and which as an insulating layer having at its top a cushioning layer (4) serves to seal trafficable concrete or steel structures from protective or covering layers applied thereto, characterized in that the cushioning layer (4) consists of a plastics-modified asphalt that consists of a thermoplastic, soft plastic material, which is adapted to be melted by the heat of the protective and covering layers which are incorporated and which has a lower melting point than the sheeting (1), and the cushioning layer (4) has a thickness of about 0.3 to 2 mm.

2. An insulating layer according to claim 1, characterized in that the cushioning layer (4) is covered by a plastics film (5).

3. An insulating layer according to claim 1 or 2, characterized in that the sheeting (1) is covered on both sides with a close-mesh woven or nonwoven fabric that has a weight of 20 to 350 g/m² and consists of fibers of glass, asbestors or plastics.